# EUROPÄISCHE PATENTSCHRIFT

(11) **EP 1 140 450 B1**
(45) Veröffentlichungstag und Bekanntmachung des Hinweises auf die Patenterteilung: **26.02.2003**
(21) Anmeldenummer: 99963578.2
(22) Anmeldetag: 17.12.1999
(51) Int. Cl.: B29C 33/36, B29C 39/24, B29C 44/38

(54) **VERFAHREN UND VORRICHTUNG ZUR HERSTELLUNG VON FORMTEILEN AUS ELASTOMEREN**
METHOD AND DEVICE FOR PRODUCING SHAPED PARTS MADE OF ELASTOMERS
PROCEDE ET DISPOSITIF POUR PRODUIRE DES PIECES MOULEES EN ELASTOMERES

(30) Priorität: 21.12.1998 DE 19859091
(43) Veröffentlichungstag der Anmeldung: 10.10.2001
(73) Patentinhaber: BASF AKTIENGESELLSCHAFT, 67056 Ludwigshafen (DE)
(72) Erfinder: RÖMHILD, Dietmar, D-49179 Ostercappeln (DE); SCHOLZ, Wolfgang, D-49448 Lemförde (DE); THIEDIG, Jürgen, D-49448 Brockum (DE); JAHN, Martin, D-49377 Vechta (DE)
(74) Vertreter: Isenbruck, Günter, Dr.
(86) Internationale Anmeldenummer: EP9910078
(87) Internationale Veröffentlichungsnummer: WO00037228

(56) Entgegenhaltungen:
- EP-A- 0 205 710
- DE-A- 3 312 830
- DE-A- 4 306 626
- US-A- 4 218 203
- PATENT ABSTRACTS OF JAPAN vol. 1996, no. 09, 30. September 1996 (1996-09-30) -& JP 08 118404 A (NISSEI PLASTICS IND CO), 14. Mai 1996 (1996-05-14)

## Beschreibung

Die Erfindung bezieht sich auf ein Verfahren und eine Vorrichtung zur Herstellung von Formteilen aus Elastomeren, insbesondere zur Herstellung von kleinen Formteilen in großen Serien.

Aus DE-A 19 09 050 ist eine Formenstraße in einer Anlage zur Verarbeitung von Mehrkomponenten- oder schäumenden Kunststoffen bekannt. In der Formenstraße gemäß DE-A 19 09 050 werden flüssige oder breiartige Kunststoffe in offene Formen abgegossen. Die Formenstraße umfaßt ein umlaufendes Förderband oder auch ein sich drehendes Karussell, auf welchem die Formen montiert sind. Ferner befinden sich an der Formenstraße eine intermittierend arbeitende Formfüllanlage sowie eine Entformstation. Jede Form umfaßt einen eigenen mechanischen Hebelverschluß zum Verschließen und Verriegeln der Form auf, der in der Schließstellung selbstsperrend ist. Hinter der Formfüllanlage befindet sich ein Verschließmittel, welches für den mechanischen Hebelverschluß sorgt.

Bei der aus DE-A 19 09 050 bekannten Lösung kann das Verschließmittel eine Steuerkurve oder ein hydraulischer oder pneumatischer Arbeitszylinder sein, der an dem Verschließhebel jeder vorbeilaufenden Form angreift und diesen in die Verschließstellung drückt. Auch kann ein hydraulischer oder pneumatischer Arbeitszylinder vorgesehen sein, der an dem Verschließhebel jeder vorbeilaufenden Form angreift und diesen in die Offenstellung drückt. Schließlich ist es gemäß DE-A 19 09 050 auch möglich, die zwei Vorgänge des Schließens und Verriegelns der Form einerseits und das Entriegeln und Öffnen der Form andererseits mit einem einzigen Arbeitszylinder zu bewerkstelligen.

DE-A 33 12 830 betrifft eine Vorrichtung zum Mehrfachbeschicken von Formwerkzeugen, wobei mehrere Mischköpfe eingesetzt werden können. Es ist vorgesehen, daß die Mischköpfe auf einem Schlitten angeordnet und derart verfahrbar sind, daß sie mit den Austrittsöffnungen oberhalb der Gießkanäle in Stellung bringbar sind und dabei die Austrittsöffhung dichtend an die betreffenden Gießkanäle anschließen.

Es hat sich jedoch herausgestellt, daß die Fertigung von Formteilen aus Elastomeren auf solchen Anlagen teuer, aufwendig und mit erhöhtem Ausschuß behaftet ist. Ein weiterer Nachteil sind die stark schwankenden Produkteigenschaften von Fertigungscharge zu Fertigungscharge.

Der vorliegenden Erfindung liegt deshalb die Aufgabe zugrunde, ein Verfahren sowie eine Vorrichtung verfügbar zu machen, welche die flexible Herstellung von Formteilen aus Elastomeren in großen Stückzahlen gestatten, wobei eine gleichmäßige Produktqualität gewährleistet bleibt.

Erfindungsgemäß wird diese Aufgabe durch die Merkmale der unabhängigen Patentansprüche gelöst.

Die erfindungsgemäße Lösung geht mit einer Vielzahl von Vorteilen einher, wie beispielsweise dem Umstand, daß das parallele Anordnen zweier Mischkopfeinheiten das gleichzeitige Befüllen nebeneinander liegender Formen oder Formennester gestattet, wodurch schnellere Taktzeiten erzielbar sind. Dadurch bedingt können weniger Formen eingesetzt werden, wobei der Materialabfall erheblich herabgesetzt werden kann und durch das individuelle Ansteuern der Mischköpfe das Kunststoffmaterial genauer dosiert werden kann. Da nebeneinander liegende Formen oder Formennester parallel zueinander befüllt werden können, entfallen auch die seitlichen Angüsse, die die Formen oder Formennester untereinander verbinden, so daß Nacharbeiten eingespart werden. Die Mischkopfeinheiten können über eine Steuereinheit gleichzeitig oder aber auch individuell angesteuert werden. Eine individuelle Ansteuerung der Mischköpfe kann beispielsweise dann erforderlich sein, wenn Formteile aus unterschiedlichen Gemischkomponenten gefertigt werden. Zur optimalen Befüllung der Formen oder Formennester können die Abstände der Mischkopfeinheiten zueinander veränderbar sein. Dadurch lassen sich die Mischkopfeinheiten unterschiedlich vorgegebenen Werkzeuggeometrien anpassen. Werden die Mischkopfeinheiten über eine Steuereinheit gleichzeitig gesteuert, können auch Formteile unterschiedlicher Konfiguration gleichzeitig gefertigt werden. Den Mischkopfeinheiten sind unterschiedliche Gemischkomponenten aus Gießmaschinen zuführbar, so daß Formteile parallel gefertigt werden können, die aus unterschiedlichen Gemischkomponenten bestehen. Die Befüllungsvorgänge des erfindungsgemäßen Verfahrens können sowohl in kontinuierlicher Abfolge gemäß vorgegebener Taktung des Werkzeugvorschubes erfolgen, sie können jedoch auch intermittierend erfolgen.

In einer Vorrichtung zur Durchführung des erfindungsgemäßen Verfahrens ist an einer Formenbefüllstation eine Mischkopfplattform vorgesehen, an der mehrere relativ zueinander positionierbare Mischkopfeinheiten aufgenommen sind. Die Mischkopfeinheiten können an der Mischkopfplattform nebeneinander oder auch hintereinander angeordnet werden; vorzugsweise jedoch im rechten Winkel zueinander. Zur Erzielung einer maximalen Flexibilität einer Formenbefüllstation kann diese mit vier relativ zueinander positionierbaren Mischköpfen ausgestattet sein, wobei jeweils zwei Mischköpfe einen Doppelmischkopf bilden können. Bei Doppelmischköpfen sind die jeweiligen Ausstoßleistungen der Mischköpfe variabel. Jeder der Mischköpfe verfügt über einen separaten Antrieb und kann ein individuell zugeordnetes Getriebe aufweisen. In vorteilhafter Weise kann an einem Doppelmischkopf an der Mischkopfplattform ein Stellantrieb vorgesehen werden, der einen der Mischköpfe relativ zu dem anderen Mischkopf oder den anderen Mischköpfen in einer X-Ebene oder einer Y-Ebene verstellt. Die Verstellmöglichkeit der Mischköpfe relativ zueinander ermöglicht wiederum eine optimale Anpassung der Kunststoffmaterialzuführung an die vorgegebene Werkzeugkonfiguration, nämlich der Formen oder der Formennester.

Mittels des erfindungsgemäßen Verfahrens sowie der erfindungsgemäßen Vorrichtung lassen sich unter erheblicher Senkung der Herstellkosten kleinere Formteile mit einem Teilegewicht zwischen 0,2g und 17kg herstellen, vorzugsweise einem Teilespektrum mit einem Teilegewicht zwischen 0,2g und 30g in großen Serien. Schließlich offenbart die Erfindung eine Formentransportanlage, die eine Formenbefüllstation, eine nachgeordnete Formenschließstation, mindestens einen Aushärtungsbereich, sowie eine Entformstation umfaßt, wobei die Formenbefüllstation mit einer Mischkopfplattform ausgestattet ist, die mehrere Mischköpfe umfaßt, die innerhalb von Stellbereichen über Stellantriebe in einer X-Ebene oder einer Y-Ebene oder in beiden Ebenen relativ zueinander positionierbar sind.

Anhand einer Zeichnung, die die erfindungswesentlichen Merkmale wiedergibt, sei die Erfindung detailliert erläutert.

Es zeigt:
- Figur 1: eine Draufsicht auf eine schematisch wiedergegebene erfindungsgemäße Formentransportanlage,
- Figur 2: eine Mischkopfplattform mit mehreren in X-Richtung und Y-Richtung relativ zueinander positionierbaren Mischköpfen und
- Figur 3: die Seitenansicht eines Doppelmischkopfes an eine Führungsplattform innerhalb eines Stellbereiches mit innerhalb eines Stellbereiches zueinander verstellbare Mischköpfe samt Stellantrieb.

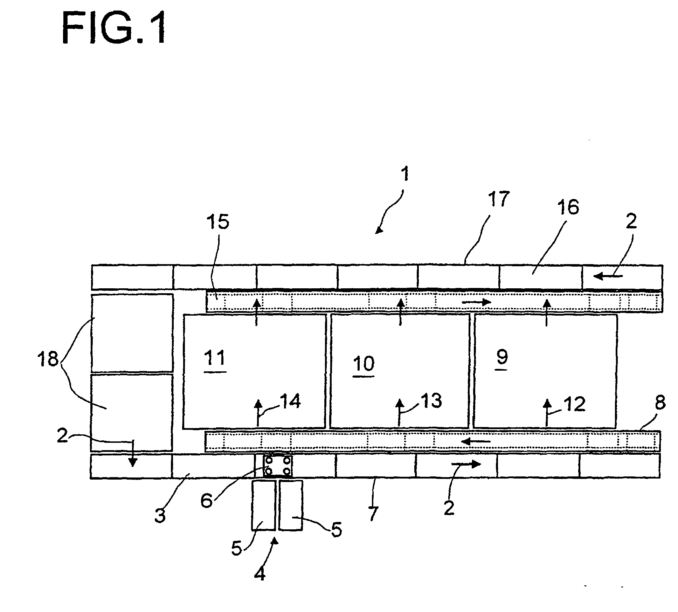

In der Darstellung nach Figur 1 ist die Draufsicht auf eine schematisch wiedergegebene erfindungsgemäße Formentransportanlage gezeigt.

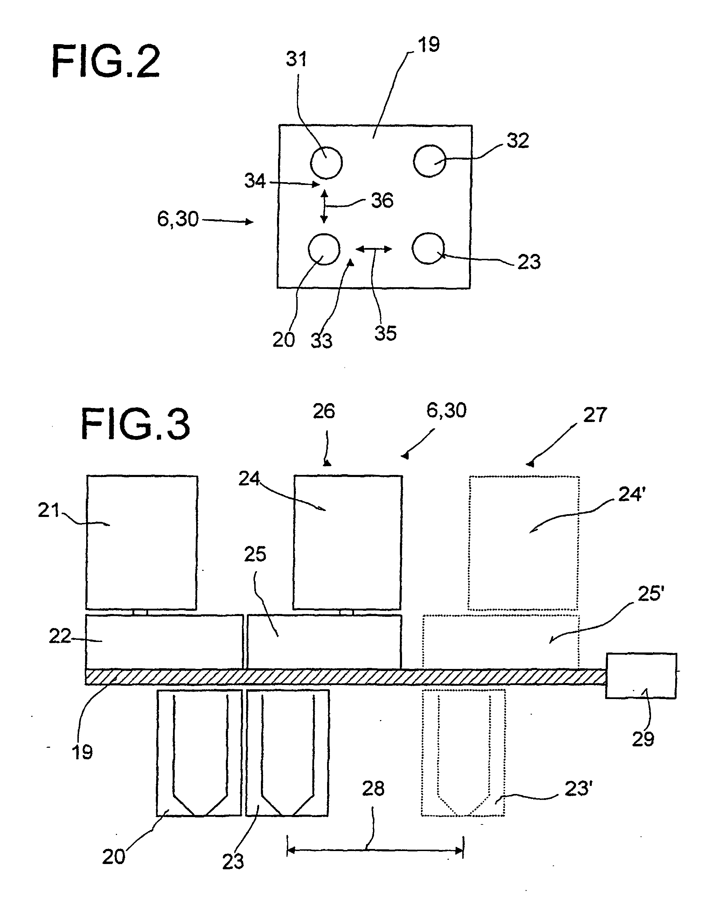

Die erfindungsgemäße Formentransportanlage 1 umfaßt eine Formenbefüllstation 4, an der in Formenförderrichtung 2 nebeneinander liegende Formen oder Formennester vorbei gefördert werden. Die Formen, auch Werkzeuge genannt, werden von einem Formenbereitstellungsbereich 18 in Formenförderrichtung 2 über eine erste Förderstrecke 3 transportiert. Neben der Formenbefüllstation 4 sind Gießmaschinen 5 angeordnet, über welche die Gemischkomponenten einer Mischkopfeinheit 6 zugeführt werden, die in den Figuren 2 und 3 näher dargestellt ist.

In der Befüllstation 4, der mehrere Gießmaschinen 5 zugeordnet sein können, werden nebeneinander liegende Formen oder Formennester parallel befüllt. Das parallele Befüllen der Werkzeuge gestattet einerseits schnellere Taktzeiten, in denen der Vorschub und die Weiterverarbeitung der befüllten Formen erfolgt, andererseits wird die Flexibilität des Herstellungsverfahrens von Formteilen dadurch erhöht, daß den Mischköpfen der Mischkopfeinheit 6 auch jeweils unterschiedliche Gemischkomponenten über die Gießmaschinen zugeführt werden können. Dadurch lassen sich gleichzeitig Formteile aus unterschiedlichen Materialien in parallel ablaufenden Befüllvorgängen der Formen oder der Formennester verwirklichen. Die verstellbare Mischkopfeinheit 6, die in der Befüllstation 4 eingesetzt wird, eröffnet ein erhebliches Flexibilisierungspotential für die Formentransportanlage 1. Nachdem die Werkzeuge in der Befüllstation 4 befüllt worden sind, werden diese entlang der ersten Förderstrecke 3 in Formenförderrichtung 2 transportiert und passieren eine Formenschließstation 7, in der die befüllten Formen oder Formennester zur Erzielung einer gleichmäßigen Aushärtens der produzierten Formteile mit einem Abdeckelement versehen werden.

Von der ersten Förderstrecke 3 gelangen die befüllten Werkzeuge anschließend in eine Aushärtebereichzuführung 8. Von der Aushärtebereichzuführung 8 zweigen mehrere Abzweige 12, 13 und 14 ab, durch welche die befüllten Formen bzw. Formennester in mehrere nebeneinander angeordnete Aushärtebereiche 9, 10 bzw. 11 gelangen. Im in Figur 1 gezeigten Ausführungsbeispiel sind drei Aushärtebereiche gezeigt, es könnten jedoch auch nur ein Aushärtebereich oder mehr als die drei dargestellten Aushärtebereiche 9, 10 und 11 von der ersten bzw. zweiten Förderstrecke 3 bzw. 16 umfaßt sein. Die Aushärtebereiche haben eine bestimmte Aufnahmekapazität für die in der Befüllstation 4 befüllten Formen. Die Aufenthaltszeit der befüllten Formenwerkzeuge kann je Aushärtezeit der verwendeten Gemischkomponenten von Form zu Form unterschiedlich lang bemessen sein.

Auch die Konfiguration, der zu fertigenden Formteile, kann die Aushärtezeit der Formteile in den Formenwerkzeugen erheblich beeinflussen, so daß beispielsweise kleinere Formteile sehr schnell die Aushärtebereiche wieder verlassen können, während komplexere Formteilgeometrien eine längere Aushärtezeit benötigen. Die in Figur 1 dargestellten Aushärtebereiche 9, 10 bzw. 11 können auch mit Kühleinrichtungen versehen sein, um die mit einem Abkühlprozeß einhergehende Aushärtung der Formteile in den Werkzeugen zu beeinflussen, da die in der Befüllstation 4 gezeigten Elastomerwerkstoffe meist bei höheren Temperaturen zur Verbesserung des Fließverhaltens zugeführt werden, jedoch die Aushärtung werkzeugspezifisch bei niedrigeren Temperaturen erfolgt.

Von den Aushärtebereichen 9,10 bzw. 11 gelangen die Formen oder Formennester mit den inzwischen ausgehärteten Formteilen auf eine Formenzuführstrekke 15 und von dieser auf einen zweiten Förderstreckenabschnitt 16. Während der Passage des zweiten Förderstreckenabschnittes 16 durchlaufen die Formenwerkzeuge eine Entformstation 17, in welcher die ausgehärteten Formteilrohlinge von der jeweiligen Form oder dem jeweiligen Formennest getrennt werden. Während der Passage des zweiten Förderstreckenabschnittes 16 werden die Formenwerkzeuge gereinigt, gegenbenenfalls von Werkstoffrückständen befreit und dann mit einem Trennmittel versehen, bevor sie in Formenförderrichtung 2 wieder auf der ersten Förderstrecke 3 zur Befüllstation 4 gefördert werden, wo die Formen oder Formennester erneut mit fließfähigen Elastomeren oder anderen Werkstoffen befüllt werden können. Im Formenbereitstellungsbereich 18 werden jeweils gleiche Formen zu sogenannten "Kampagnen" zusammengestellt, um die Verstellwege der Mischkopfeinheiten zur Befüllung der Formennester für eine möglichst große Anzahl Formen gleichzuhalten und die Zustellwege der Mischköpfe jeweils abhängig von den zu befüllenden Kampagnen zu halten.

In Figur 2 ist eine verstellbare Mischkopfeinheit dargestellt, mit mehreren in X-Richtung und/oder in Y-Richtung relativ zueinander positionierbaren Mischköpfen.

Diese vereinfacht wiedergegebene Draufsicht zeigt eine Mischkopfplattform 19, die zur Relativpositionierung einzelner Mischköpfe 20, 23, 31 und 32 mit Führungsmitteln versehen sein kann, die jedoch in Figur 2 nicht näher dargestellt sind. Auf der in Figur 2 dargestellten rechteckförmigen Mischkopfplattform 19 sind vier Mischköpfe 20, 23, 31 und 32 jeweils rechtwinklig zueinander angeordnet. Beispielsweise können die nebeneinander angeordneten Mischköpfe 20, 23 in eine erste Verstellrichtung relativ zueinander bewegt werden, wobei unerheblich ist, ob der erste Mischkopf 20 relativ zum zweiten Mischkopf 23 ist oder umgekehrt. Bei den dargestellten Mischköpfen 20,23 kann es sich um handelsübliche Mischköpfe handeln, an der Mischkopfeinheit 6 können jedoch auch Hochdruckmischköpfe aufgenommen sein, die relativ zueinander positionierbar sind. Den beiden erwähnten Mischköpfen 20, 23 gegenüberliegend können auch ein dritter Mischkopf 31 sowie ein vierter Mischkopf 32 angeordnet sein, die dann in vorteilhafter Weise eine Mischkopfstation bilden. Der dritte Mischkopf 31 kann in Y-Richtung 34 gesehen in eine zweite Verstellrichtung 36 bewegt werden, wodurch die Mischköpfe sich derart flexibel auf die zu befüllenden Formenwerkzeuge voreinstellen lassen, daß je nach zu verarbeitender Gemischkomponente optimale Befüllbedingungen erzielbar sind. Die Mischköpfe 20, 23, 31 oder 32 können jeweils mit einer Gießmaschine 5 verbunden sein, durch welchen den Mischköpfen 20, 23, 31 oder 32 das Material zugeführt wird. Zur Ansteuerung der in der Mischkopfstation 30 vorgesehenen Mischköpfe dient eine Steuereinheit, mit der die einzelnen Mischköpfe gleichzeitig oder zeitversetzt zueinander angesteuert werden können; dies kann beispielsweise dann erforderlich sein, wenn zwei Formenwerkzeuge unterhalb der Befüllstation 4 liegen, von denen eines eine längere Befüllzeit benötigt, da ein größeres Formteil zu fertigen ist, demzufolge auch mehr Material erforderlich ist und daher die Befüllzeit länger ist. Dieser betreffende Mischkopf kann dann individuell früher angesteuert werden als der daneben positionierte Mischkopf. Werden hingegen Formteile ähnlicher Geometrien und Größen gefertigt, können die Mischköpfe auch gleichzeitig angesteuert werden.

Figur 3 zeigt die Seitenansicht eines Doppelmischkopfes an einer Mischkopfplattform, mit einem Stellantrieb und zueinander verstellbaren Mischköpfen samt Stellantrieb.

An der bereits erwähnten Mischkopfplattform 19 ist seitlich ein Steilantrieb 29 aufgenommen, welcher die Mischköpfe 20 bzw. 23 relativ zur Mischkopfplattform 19 bewegt Hinter den hier dargestellten Mischköpfen 20 bzw. 23 können weitere Mischköpfe 31,32 angeordnet sein, welche durch die beiden Mischköpfe 20, 23 verdeckt sind. Die Mischköpfe 20, 23 können an der Mischkopfplattform 19 jeweils relativ zueinander positionierbar sein; zu diesem Zweck können Führungsmittel wie Schienen oder Schlitze an der Mischkopfplattform 19 aufgenommen sein, in den die Mischköpfe 20, 23 einerseits, deren Getriebe 22, 25 samt Antrieben 21, 24 andererseits verschiebbar sind.

In der Darstellung gemäß Figur 3 befindet sich der erste Mischkopf 20 versehen mit einem Antrieb 21 und einem Getriebe 22 in der äußersten Position der Mischkopfplattform 19, wobei der Mischkopf 20 mit der Gießmaschie 5 verbunden ist Neben dem ersten Mischkopf 20 ist ein zweiter Mischkopf 23 mit zugeordnetem Antrieb 24 samt Getriebe 25 dargestellt. In den durchgezogenen Linien befindet sich dieser in einer ersten Position 26, so daß der zweite Mischkopf 23 unmittelbar neben dem ersten Mischkopf 20 liegt In diesem Falle lassen sich zwei Formen mit nah beieinander liegendem Materialeinlauf befallen. Liegen die optimalen Befüllpositionen der Formen bzw. Formennester hingegen weiter auseinander, so läßt sich mittels des Stellantriebes 29 der zweite Mischkopf 23 in eine zweite Position 27 relativ zum ersten Mischkopf 20 bewegen. In der zweiten Position 27 ist der zweite Mischkopf 231, der Antrieb mit 24' sowie das Getriebe mit 25' bezeichnet. In der Figur 3 ist die Relativpositionierung des zweiten zum ersten Mischkopf 20 bzw. 23 gezeigt. Es wäre natürlich auch eine umgekehrte Verstellbarkeit denkbar. In der in Figur 3 gezeigten Darstellung korrespondiert der Verstellbereich 28 mit der Verstellrichtung 35 in X-Ebene der Mischkopiplattform 19 gemäß Figur 2. In ähnlicher Weise können die weiteren Mischköpfe 31, 32 einer Mischkopfstation 30 relativ zueinander bewegbar sein. Werden an der Mischkopfplattform 19 beispielsweise vier Mischköpfe 20, 23; 31, 32 aufgenommen, lassen sich große Formenwerkzeuge auch in kreisenden Bewegungen unter optimalen Bedingungen befüllen. Bei großen Formenwerkzeugen ist der gleichmäßige Eintrag des flüssigen Kunststoffgemischs oft von entscheidender Bedeutung für die erzielbare Qualität.

Mit der erfindungsgemäßen Mischkopfstation 6, 30 lassen sich in vorteilhafter Weise Formteile aus PU-Elastomeren fertigen, die eine Teilegewichtsspektrum von 0,2g bis 17kg umfassen, vorzugsweise liegt das Teilegewichtsspektrum zwischen 0,2g und 30g. Die Formteile werden in großen Serien hergestellt, wobei das vorgeschlagene Herstellungsverfahren und die vorgeschlagene Vorrichtung die Herstellkosten drastisch senken, da kürzere Taktzeiten möglich sind. Werden beispielsweise zwei nebeneinander liegende Reihen von Formenwerkzeugen durch zwei Mischköpfe befällt, können während einer Befüllzeiteinheit doppelt soviele Formen befüllt werden. Dadurch läßt sich der Formteilausstoß pro Zeiteinheit verdoppeln, die Produktivität einer solchen Anlage steigt drastisch. Durch die präzise Vorpositionierung der Mischköpfe 20,23,31 und 32 können bis zu vier Formwerkzeuge befüllt werden. Die präzise Vorpositionierung der Mischköpfe in die für die Befüllungen der jeweiligen Formen optimale Position führt zu einem Minimum an Ausschußteilen. Da die Mischköpfe nebeneinander angeordnet sind und nebeneinander liegenden Formen gleichzeitig oder zeitversetzt befallen, ist eine Verfahrbewegung der Formen relativ zum Mischkopf nunmehr nicht mehr nötig. Dadurch unterbleiben auch Angüsse an den Formen oder Formenwerkzeugen oder an den Formteilen, so daß keine Nachbearbeitungen in dieser Hinsicht mehr erforderlich sind, was zur Kostensenkung beiträgt.

### Teileliste

- 1: Formentransportanlage
- 2: Formenförderrichtung
- 3: erste Förderstrecke
- 4: Befüllstation
- 5: Gießmaschine
- 6: Mischkopfeinheit
- 7: Formenschließstation
- 8: Aushärtebereichzuführung
- 9: Aushärtebereich
- 10: Aushärtebereich
- 11: Aushärtebereich
- 12: Abzweigung
- 13: Abzweigung
- 14: Abzweigung
- 15: Formenzuführstrecke
- 16: zweite Förderstrecke
- 17: Entformstation
- 18: Formenbereitstellungsbereich
- 19: Mischkopfplattform
- 20: erster Mischkopf
- 21: Antrieb
- 22: Getriebe
- 23,23': zweiter Mischkopf
- 24, 24': Antrieb
- 25, 25': Getriebe
- 26: erste Position zweiter Mischkopf
- 27: zweite Position zweiter Mischkopf
- 28: Verstellbereich
- 29: Stellantrieb
- 30: Mischkopfstation
- 31: dritter Mischkopf
- 32: vierter Mischkopf
- 33: Mischkopfabstand X-Ebene
- 34: Mischkopfabstand Y-Ebene
- 35: erste Verstellrichtung
- 36: zweite Verstellrichtung

## Patentansprüche

1. Verfahren zur Herstellung von Formteilen aus Elastomeren, wobei Formen entlang eines Förderpfades an mehreren Bearbeitungsstationen vorbeigeführt werden, mit nachfolgenden Verfahrensschritten:
- dem Anordnen mindestens zweier individuell ansteuerbarer Mischkopfeinheiten (20, 23) parallel zueinander,
- dem Ansteuern der Mischkopfeineinheiten (20, 23) derart, daß bei einem Befullvorgang eines Werkzeuges nebeneinander liegenden Formen befüllt werden.

2. Verfahren gemäß Anspruch 1, **dadurch gekennzeichnet, daß** die Mischkopfeinheiten (20, 23) über eine Steuereinheit gleichzeitig angesteuert werden.

3. Verfahren gemäß Anspruch 1, **dadurch gekennzeichnet, daß** für eine optimale Befüllung einzelner Formen oder Formennester die Abstände der Mischkopfeinheiten (20, 23) zueinander veränderbar sind.

4. Verfahren gemäß Anspruch 2, **dadurch gekennzeichnet, daß** Formteile unterschiedlicher Konfiguration gleichzeitig gefertigt werden.

5. Verfahren gemäß Anspruch 2, **dadurch gekennzeichnet, daß** den Mischkopfeinheiten (20,23) unterschiedliche Gemischkomponenten aus Gießmaschinen (5) zuführbar sind.

6. Vorrichtung zur Durchführung des Verfahrens gemäß Anspruch 1, mit einer Formenbefullstation, einer Formenschließstation, einem Aushärtebereich sowie einer Entformstation, **dadurch gekennzeichnet, daß** an einer Formenbefullstation (4) eine Mischkopfplattform (19) mit mehreren relativ zueinander positionierbaren Mischkopfeinheiten (20,23; 31,32) aufgenommen ist.

7. Vorrichtung gemäß Anspruch 6, **dadurch gekennzeichnet, daß** vier relativ zueinander positionierbare Mischköpfe (20, 23, 31, 32) zu einer Befüllstation (4) zusammengefaßt sind.

8. Vorrichtung gemäß Anspruch 6, **dadurch gekennzeichnet, daß** zwei Mischköpfe (20,23) einen Doppelmischkopf bilden, wobei die Mischköpfe (20,23) jeweils eine variable Ausstoßleistung besitzen.

9. Vorrichtung gemäß Anspruch 6, **dadurch gekennzeichnet, daß** einer der Mischköpfe (20, 23) jeweils relativ zum anderen über einen Stellantrieb (29) zur Verstellung innerhalb eines Stellbereiches (28) der X-Ebene (33) verfügt.

10. Vorrichtung gemäß Anspruch 6, **dadurch gekennzeichnet, daß** einer der Mischköpfe (20, 23) jeweils relativ zum anderen über einen Stellantrieb (29) zur Verstellung innerhalb eines Stellbereiches (28) der Y-Ebene (33) verfügt.

11. Formentransportanlage mit einer Formenbefüllstation, mit einer Formenschließstation, mindestens einem Aushärtebereich, sowie einer Entformstation, **dadurch gekennzeichnet, daß** an einer Formenbefüllstation (4) eine Mischkopfplattform (19) mit mehreren Mischköpfen (20, 23; 31, 32) vorgesehen ist, die innerhalb von Stellbereichen (28) über Stellantriebe (29) in der X-Ebene (33) bzw. der Y-Ebene (34) relativ zueinander positionierbar sind.

## Claims

1. A process for producing moldings made from elastomers, where molds are conducted along a conveying route past two or more workstations, with the following process steps:
- the arranging of at least two mixing-head units (20, 23) parallel to one another and capable of being triggered individually, and
- the triggering of the mixing-head units (20, 23) in such a way that, in a filling procedure for a mold, molds situated adjacent to one another are filled.

2. A process as claimed in claim 1, wherein the mixing-head units (20, 23) are triggered simultaneously via a control unit.

3. A process as claimed in claim 1, wherein the distances between the mixing-head units (20, 23) can be varied to optimize the filling of individual molds or mold cavities.

4. A process as claimed in claim 2, wherein moldings of different configurations are manufactured simultaneously.

5. A process as claimed in claim 2, wherein it is possible to feed to the mixing-head units (20, 23) different mixing components from feeder machines (5).

6. An apparatus for carrying out the process as claimed in claim 1, with a mold-filling station, a mold-closing station, a curing area, and also a demolding station, wherein a mold-filling station (4) has a mixing-head platform (19) with two or more mixing-head units (20, 23; 31, 32) which can be positioned relative to one another.

7. An apparatus as claimed in claim 6, wherein four mixing heads (20, 23, 31, 32) which can be positioned relative to one another have been brought together to give a filling station (4).

8. An apparatus as claimed in claim 6, wherein two mixing heads (20, 23) form a double mixing head, where each of the mixing heads (20, 23) has a variable output rate.

9. An apparatus as claimed in claim 6, wherein, in each case, one of the mixing heads (20, 23) has, relative to the other, a positioning drive (29) for adjustment within a positioning range (28) in the X plane (33).

10. An apparatus as claimed in claim 6, wherein, in each case, one of the mixing heads (20, 23) has, relative to the other, a positioning drive (29) for adjustment within a positioning range (28) in the Y plane (34).

11. A mold-conveying system with a mold-filling station, with a mold-closing station, with at least one curing area, and also with a demolding station, wherein, on a mold-filling station (4), there is a mixing-head platform (19) with two or more mixing heads (20, 23; 31, 32) which can be positioned relative to one another within positioning ranges (28) via positioning drives (29) in the X plane (33) and, respectively, in the Y plane (34).

## Revendications

1. Procédé de fabrication de pièces moulées en élastomères, des moules étant menés le long d'un chemin de transport en passant devant plusieurs stations d'usinage, avec les étapes de procédé suivantes :
- la mise en parallèle d'au moins deux unités de têtes mélangeuses (20, 23) commandables individuellement,
- la commande des unités de têtes mélangeuses (20,23) de telle manière que des moules placés les uns à côté des autres sont remplis lors d'une opération de remplissage d'un outil.

2. Procédé selon la revendication 1, **caractérisé en ce que** les unités de têtes mélangeuses (20, 23) sont commandées simultanément par l'intermédiaire d'une unité de commande.

3. Procédé selon la revendication 1, **caractérisé en ce que**, pour le remplissage optimal de moules individuels ou de vides de moules, les écarts entre les unités de têtes mélangeuses (20, 23) sont mutuellement modifiables.

4. Procédé selon la revendication 2, **caractérisé en ce que** des pièces moulées de configuration différente sont fabriquées simultanément.

5. Procédé selon la revendication 2, **caractérisé en ce que** différents constituants de mélanges provenant de machines à couler (5) peuvent être alimentés aux unités de têtes mélangeuses (20, 23).

6. Dispositif pour la réalisation du procédé selon la revendication 1, avec une station de remplissage de moules, une station de fermeture de moules, une zone de durcissement ainsi qu'une station de démoulage, **caractérisé en ce qu'**une plate-forme de têtes mélangeuses (19) ayant plusieurs unités de têtes mélangeuses (20, 23 ; 31, 32) pouvant être positionnées relativement les unes par rapport aux autres est logée sur une station de remplissage de moules (4).

7. Dispositif selon la revendication 6, **caractérisé en ce que** quatre têtes mélangeuses (20, 23, 31, 32) pouvant être positionnées relativement les unes par rapport aux autres sont regroupées en une station de remplissage (4).

8. Dispositif selon la revendication 6, **caractérisé en ce que** deux têtes mélangeuses (20, 23) forment une tête mélangeuse double, les têtes mélangeuses (20, 23) possédant chacune un débit variable.

9. Dispositif selon la revendication 6, **caractérisé en ce que** l'une des têtes mélangeuses (20, 23) dispose, par rapport à l'autre, d'un organe moteur (29) pour le réglage du plan X (33) dans une zone de réglage (28).

10. Dispositif selon la revendication 6, **caractérisé en ce que** l'une des têtes mélangeuses (20, 23) dispose, par rapport à l'autre, d'un organe moteur (29) pour le réglage du plan Y (34) dans une zone de réglage (28).

11. Installation de transport de moules, avec une station de remplissage de moules, avec une station de fermeture de moules, avec au moins une zone de durcissement ainsi qu'une station de démoulage, **caractérisée en ce qu'**une plate-forme de têtes mélangeuses (19) ayant plusieurs têtes mélangeuses (20, 23 ; 31, 32) est prévue sur une station de remplissage de moules (4), ces têtes mélangeuses pouvant être positionnées relativement les unes par rapport aux autres dans le plan X (33) resp. dans le plan Y (34) dans des zones de réglage (28) par l'intermédiaire d'organes moteurs (29).
